Europäisches Patentamt

European Patent Office

Office européen des brevets

(19)

(11) Publication number: **0 108 042**
**A2**

# (12) EUROPEAN PATENT APPLICATION

(21) Application number: **83850231.8**

(22) Date of filing: **30.08.83**

(51) Int. Cl.³: **B 62 K 21/14**

(30) Priority: **06.09.82 SE 8205062**
**19.10.82 SE 8205918**

(43) Date of publication of application:
**09.05.84 Bulletin 84/19**

(84) Designated Contracting States:
**AT BE CH DE FR GB IT LI LU NL SE**

(71) Applicant: **Hernqvist, Marie-Louise**
**Storbatsvägen 8**
**S-302 71 Halmstad(SE)**

(72) Inventor: **Hernqvist, Marie-Louise**
**Storbatsvägen 8**
**S-302 71 Halmstad(SE)**

(74) Representative: **Nilsson, Lennart**
**Lennart Nilsson Patentbyra AB Box 271**
**S-311 01 Falkenberg(SE)**

(54) Improvements to cycle handlebars.

(57) The disclosure relates to a cycle handlebar with at least one expandable portion in its impact area, this portion having expansion directional members in such a manner that the circumference expands substantially on compression of the expandable portion in the longitudinal direction of the handle for forming an extended and widened impact surface.

Fig 5

EP 0 108 042 A2

APPLICANT:          HERNQVIST MARIE-LOUISE

INVENTION:          IMPROVEMENTS TO CYCLE HANDLEBARS

## TECHNICAL FIELD

The present invention relates to improvements to cycle handlebars with two handgrips, placed at either end of a handlebar and being interconnected by means of a member extending through the handlebar.

## THE STATE OF THE ART

The handgrips on prior art bicycle handlebars are fixed and, possibly provided with a handle of plastic or rubber. The end of such a handle may, in certain cases, be spherically designed and be located outside the end of the handgrip end of the handlebar, so as to allow for a certain elasticity in the same way as a rubber ball or the like. Prior art handgrip ends with such handles or solely with a winding of tape have proved to entail serious injury in conjunction both with individual fall accidents and with more serious accidents resulting from the fact that the handgrip end of the handlebar is often directed towards and penetrates into different parts of the abdomen, with consequential injury to inner organs, even if the wall of the abdomen itself is not punctured. Such internal injury may lead to severe handicap, or even to fatal outcome. The two West German publications DEO 3015329 and 3029569 describe cycle handgrips which have been designed so as to obviate the above-mentioned drawback, but all of the constructions described in these publications, as well as other prior art constructions merely realize a handgrip which is yieldable and elastic. Medical expertise has found that these properties are insufficient to avoid the above-mentioned injuries.

OBJECT OF THE INVENTION

The task forming the basis of the present invention is to realize an apparatus which is partly yieldable and partly allows for a considerable widening and increase of the impact area.

SOLUTION

This task is solved according to the present invention in that the apparatus described by way of introduction is characterized in that each handgrip end is provided with at least one expandable portion on its imapact area, the portion displaying directional means in such a manner that the circumference expands considerably on compression of the portion in the longitudinal direction of the handgrip end. This expandable portion is disposed on a member which is reciprocally telescopically shiftable in relation to the end proper. The telescopically shiftable portion is spring-biassed in such a manner that movement towards the end is counter-acted, while movement from the end is assisted. The shiftable portion is tubular and may be passed onto the handgrip end and forms an extension thereof. A compression spring is disposed between the handgrip end and the end of the tubular portion facing therefrom. That portion of the tubular portion which extends in over the handgrip end is provided with a longitudinal groove for an arrest member on the outside of the handgrip end. The arrest member is constituted by the end of a pin which extends transversely of the handgrip-end , and which is preferably conical.

ADVANTAGES

As a result of the present invention, there will be realized a considerably improved apparatus which, primarily, and possibly in combination therewith, will have a considerable shock-absorbing effect which may readily be adapted to the weight of the rider of the cycle. Furthermore, an apparatus according to the present invention is extremely simple to manufacture and may readily be applied both to new handlebars and to used handlebars. As a result of an apparatus according to the present invention, the impact energy occurring, as the result of a fall, between the abdomen and the handgrip end of the handlebar will be diffused throughout a larger area and will be consumed by the spring-counteracted telescopic compression of the handgrip end, whereby that energy which may cause injury to, or in, the abdomen, will be substantially consumed.

BRIEF DESCRIPTION OF THE ACCOMPANYING DRAWINGS

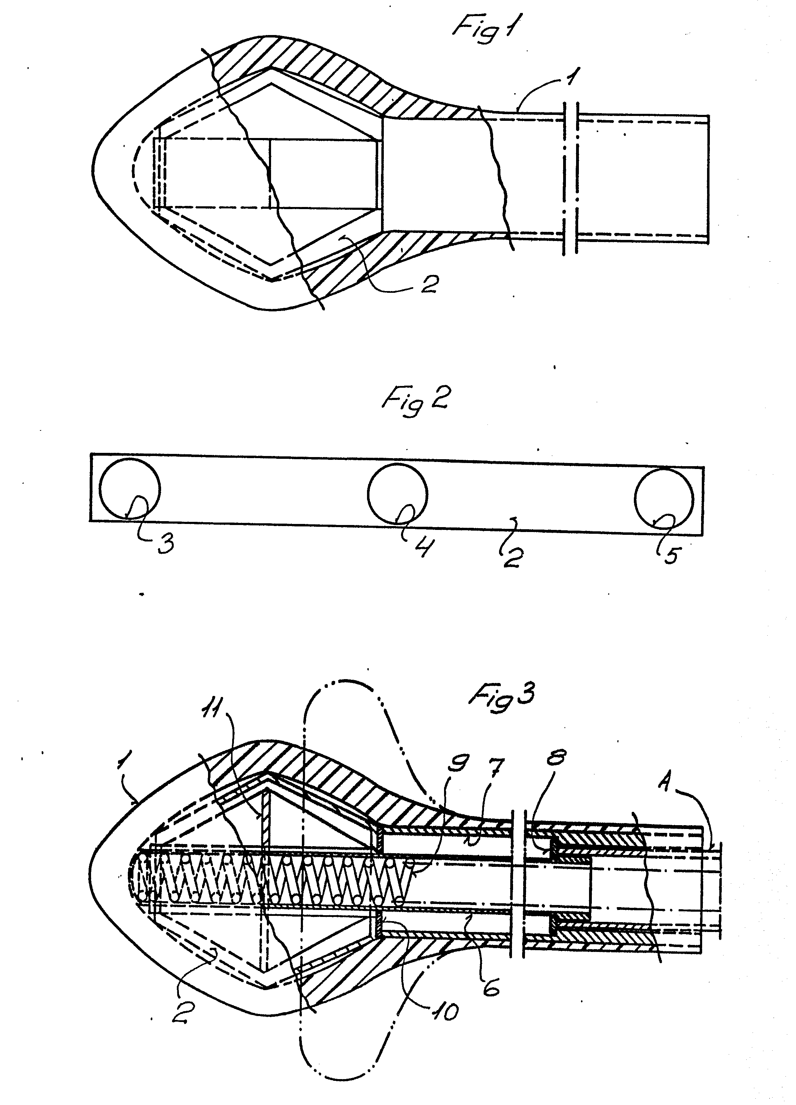

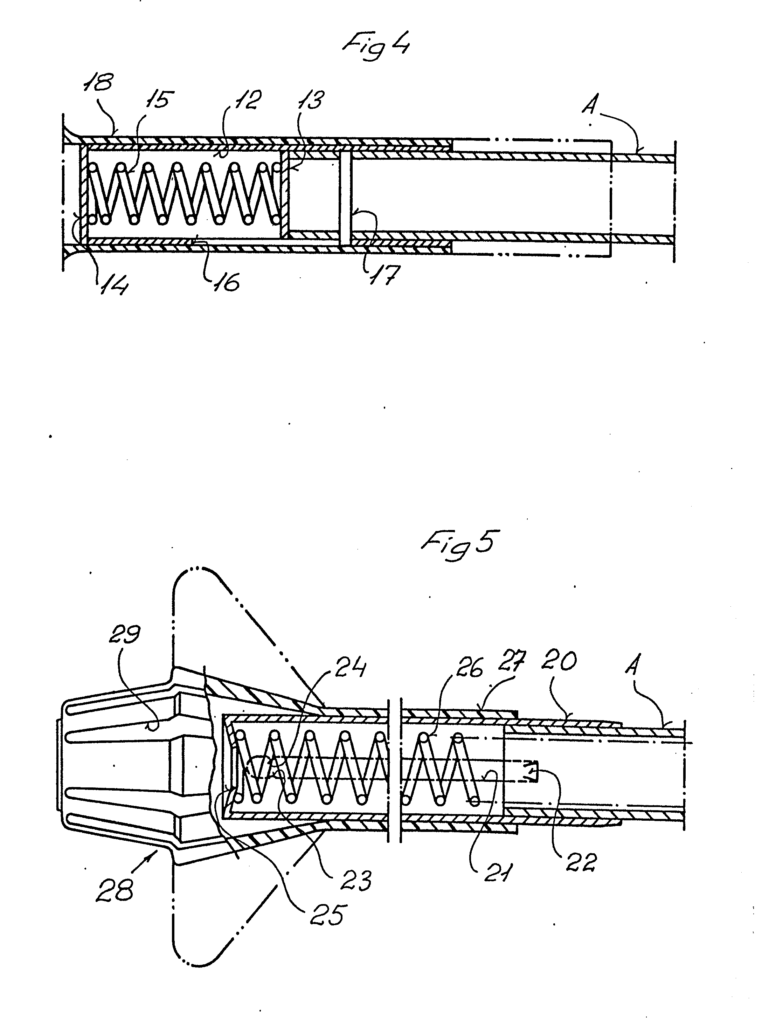

One embodiment of the present invention will be described in greater detail below, with reference to the accompanying Drawings. Fig. 1 is a schematic view, partly in section, of one embodiment of an apparatus according to the present invention. Fig. 2, in extended state, shows a part of the apparatus of Fig. 1. Fig. 3 is a schematic view, partly in section, of a further embodiment of an apparatus according to the present invention, combined with a telescopically shiftable portion of a cycle handlebar. Fig. 4 is a longitudinal section of a further embodiment of a telescopically shiftable portion of a cycle handlebar. Fig. 5 is a schematic view, partly in section, of a further embodiment of an apparatus according to the present invention.

DESCRIPTION OF PREFERRED EMBODIMENT

The embodiment of the present invention illustrated in Fig. 1 consists of a handgrip portion 1 with an expandable end. The handgrip portion 1 proper is intended to be passed on the end of a cycle handlebar (not shown). The end illustrated to the left in Fig. 1 is hollow and accommodates one or more directional strips 2. One such strip is shown in greater detail in Fig. 2. For a combination of an apparatus according to the present invention with a telescopically shiftable handgrip end, the directional strip 2, which may be of metal or nylon, is provided with holes 3, 4 and 5. The holes are intended for guiding the strip 2 on a spring sleeve 6 (Fig. 3) of nylon. The embodiment illustrated in Fig. 1 is provided with two strips 2, which are bent substantially intermediately of the holes 3, 4; and 4, 5. As will be apparent from Fig. 1, the strips 2 will force the material in the end of the handgrip portion 1 to move outwardly so that the circumference is broadened on the exercising of a force on the handgrip portion 1 from the left in Fig. 1. Naturally, the same effect may be attained without strips 2, by a suitable design of the material of the portion of the handgrip portion 1 illustrated to the left in Fig. 1.

In Fig. 3, broken lines show the manner in which the end of the handgrip portion 1 expands and creates a considerably larger impact area for diffusion of the impact force. As has been mentioned above, the embodiment illustrated in Fig. 3 is combined with a telescopically shiftable portion in the form of a sleeve 7 which preferably consists of nylon. The portion of the sleeve 7 located most proximal the handlebar is of slightly greater material thickness than the remainder of the sleeve. The end of the sleeve 6 leads into the handlebar proper, while the sleeve is prevented from being removed from the handlebar by a washer 8 fixedly retained on the end of the handlebar. A spring 9 is disposed in the spring sleeve 6 and is, in the present embodiment, 30 cm. in length and is pre-tensioned. On the end of the sleeve 7, there is disposed a washer 10 which partly guides the spring sleeve 6 and partly counteracts movement of the strips 2 within the sleeve 7. Further-more, between the strips 2 and the sleeve 6, there may be provided a metal or nylon washer 11. On the exercising of a force in a direction indicated by the arrows in Fig. 3, the end of the handgrip portion 1 will assume the position illustrated by broken lines, and the spring 9 will counteract shifting of the parts in the direction of the arrows so that impact force will partly be diffused throughout a larger area and will partly be absorbed by the spring 9.

Fig. 4 shows the one handgrip end A of the handlebar. A tubular portion or sleeve 12 is partly passed onto the handgrip end 1. A washer 13 is placed on the end of the handgrip end 1, and the diameter of the washer 13 corresponds substantially to the outer diameter of the handgrip end 1. The tubular portion 12 is closed at its outer end by means of a washer 14. A compression spring 15 is disposed between the washers 13 and 14.

A longitudinal groove 16 is provided in the tubular portion 12 and is intended for the end of a pin 17 which extends through the handgrip end 1. The pin 17 may suitably be a conical spring pin, its thicker end projecting outside the surface of the handgrip end 1 and into the groove 16. In this manner, the end of the pin 17 located in the groove 16 will serve as a stop member or member for restricting the possible range of movement of the tubular portion 12 on the handgrip end 1.

The tubular portion 12 is, clearly, shiftable on the handgrip end 1, as is illustrated by means of arrows and broken lines. The compression force of the spring 15 may, naturally, be adapted to different age-groups and weight classes of riders. Outside the tubular portion 12, there is disposed a per se known protective grip 18 of the type described above.

For mounting an apparatus according to the present invention onto the handgrip end of an extant handlebar, it is merely necessary that the end 1 be provided with holes for the pin 17, whereafter the apparatus is passed onto the handgrip end, with the washer 13 most proximal the end of the handgrip end 1, until the groove 16 is aligned with the larger of the holes for the pin 17 so that this may be urged in and, as it were, through the handgrip end 1. Thereafter, the handle 18 need merely be passed onto the tubular portion 12.

Fig. 5 illustrates a further embodiment of the present invention. This embodiment consists of a handle 1 with an expandable portion 2 in combination with a telescopic handgrip end on the handlebar. The handgrip end consists of a sleeve 20 which is passed on the end of the handlebar and displays one or more grooves 21 for cooperation with a flap 22 at the end of the handlebar. The flap 22 is preferably of the configuration illustrated in Fig. 5 and is directed outwardly so as to run in the groove 21. At the outer end of the groove 21, projections 23 and 24 are provided for engagement with the flap 22 and retention of the sleeve 20 in the inner position. The end of the sleeve 20 has an interior flange 25 which is bent into the sleeve 20 for centering a spring 26 which may extend right up to a stop (not shown) in the handlebar, in the proximity of the handlebar stem. A handle portion 27 with an expandable portion 28 is disposed on the sleeve 20. The expandable portion 28 has expansion direction members 29 in the form of material notches, material gatherings and inner, and outer, folds  , the inner folds being located between the outer folds  and counter-directed for forming a material surface which permits the desired expansion, as intimated by ghosted lines.

CLAIMS

1. An apparatus in cycle handlebars with two handgrip ends, each located on either end  of a handlebar, and being interconnected by means of a portion extending through the handlebar, w h e r e i n  each handgrip end is provided with at least one expandable portion (1) of its impact area, and displaying directional means (2) in such a manner that the circumference expands substantially on compression of the portion in the longitudinal direction of the handgrip end.

2. The apparatus as recited in claim 1, w h e r e i n  said expandable portion (1)is disposed on a portion (12) which is reciprocally telescopically shiftable  in relation to the end proper.

3. The apparatus as recited in claim 2, w h e r e i n  said telescopically shiftable portion (12) is spring-biassed (15) in such a manner that movement towards the end is counteracted and movement away from the end is assisted.

4. The apparatus as recited in claims 2 and 3, w h e r e i n  said shiftable portion (12) is tubular and may be shiftably fitted on the handgrip end (1) and forms an extension thereof.

5. The apparatus as recited in claim 4, w h e r e i n  a compression spring (15) is disposed between the handgrip end (1) and that end of the tubular portion (12) turned to face therefrom.

6. The apparatus as recited in claims 4 and 5, w h e r e i n  that portion of the tubular portion (12) which extends in over the handgrip end (1) has at least one longitudinal groove (16) for a stop member (17) on the outside of the handgrip end (1).

Fig 1

Fig 2

Fig 3

Fig 4

18  15  12  13  A

14  16  17

Fig 5

29  24  26 27 20  A

28  23  25  21  22